# EUROPEAN PATENT APPLICATION

(11) **EP 4 478 472 A1**
(43) Date of publication of application: **18.12.2024**
(21) Application number: 24765004.7
(22) Date of filing: 19.02.2024
(51) Int. Cl.: H01M 10/058, H01M 4/66, H01M 4/38, H01M 4/485, H01M 10/052, H01M 4/02

(54) **ELECTRODE ASSEMBLY COMPRISING POSITIVE ELECTRODE HAVING INSULATING COATING LAYER AND MANUFACTURING METHOD THEREFOR**

(30) Priority: 28.04.2023 KR 20230056601; 14.02.2024 KR 20240021296
(71) Applicant: LG Energy Solution, Ltd., Seoul 07335 (KR)
(72) Inventor: LEE, Hak Soo, Daejeon 34122 (KR); MOON, Jong Min, Daejeon 34122 (KR); KIM, Chang Hee, Daejeon 34122 (KR); SHIM, Kyu Won, Daejeon 34122 (KR); KIM, Jae In, Daejeon 34122 (KR); OK, Jung Yun, Daejeon 34122 (KR)
(74) Representative: Plasseraud IP
(86) International application number: PCT/KR2024/095417
(87) International publication number: WO 2024/225870

(57) **Abstract**

Disclosed are an electrode assembly including a positive electrode having an insulating coating layer and a method of manufacturing the same, and more particularly an electrode assembly including at least one first monocell; and a second monocell stacked on the uppermost end of the first monocell, wherein the second monocell is provided with an insulating coating layer, and a method of manufacturing the same.

## Description

### [Technical Field]

This application claims the benefit of priority to Korean Patent Application No. 2023-0056601 filed on April 28, 2023 and Korean Patent Application No. 2024-0021296 filed on February 14, 2024, the disclosures of which are incorporated herein by reference in their entireties.

The present invention relates to an electrode assembly including a positive electrode having an insulating coating layer and a method of manufacturing the same, and more particularly to an electrode assembly including a positive electrode having an insulating coating layer and a method of manufacturing the same capable of increasing energy density while performing a stable manufacturing process.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Required capacities of lithium secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

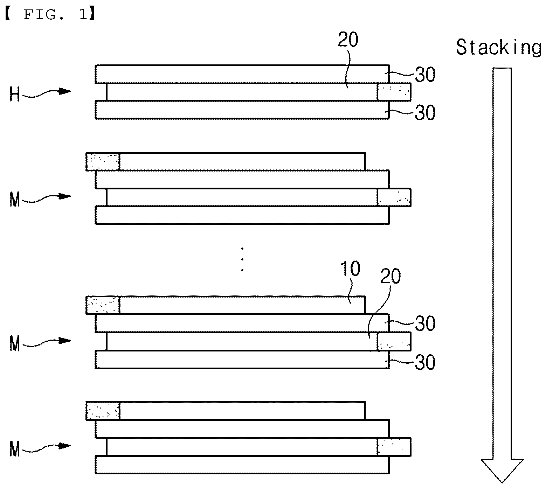

Meanwhile, as shown in FIG. 1, which is a sectional view of a conventional electrode stack, an electrode assembly received in a cell case is generally configured such that a plurality of monocells M, in each of which a separator 30, a negative electrode 20, a separator 30, and a positive electrode 10 are disposed in that order, and one half-cell H, in which a separator 30, a negative electrode 20, and a separator 30 are disposed in that order, are sequentially stacked.

However, the half-cell, which is located at the uppermost end of the electrode assembly, is thinner than each monocell, since the half-cell includes a separator, a negative electrode, and a separator, whereby it is not easy to transport or stack the half-cell, which may lead to a decrease in efficiency of a production process or to product defects.

In addition, after stacking a plurality of monocells and one half-cell, it is necessary to wrap the electrode assembly with a separate insulating member, such as a separator, in order to ensure insulation from the cell case.

### (Prior Art Document)

(Patent Document 1) Korean Patent Application Publication No. 2015-0100017

### [Disclosure]

### [Technical Problem]

The present invention has been made in view of the above problems, and it is an object of the present invention to provide an electrode assembly including a positive electrode having an insulating coating layer and a method of manufacturing the same capable of performing a stable production process.

It is another object of the present invention to provide an electrode assembly including a positive electrode having an insulating coating layer and a method of manufacturing the same capable of increasing production efficiency by reducing the number of unit production processes.

### [Technical Solution]

An electrode assembly according to the present invention to accomplish the above objects includes at least one first monocell; and a second monocell stacked on the uppermost end of the at least one first monocell, wherein the second monocell has an insulating coating layer.

Also, in the electrode assembly according to the present invention, the insulating coating layer may include any one of polyethylene terephthalate (PET), polypropylene (PP), and ceramic.

Also, in the electrode assembly according to the present invention, the insulating coating layer may include ceramic.

Also, in the electrode assembly according to the present invention, the second monocell may be configured such that a second separator, a second negative electrode, a second separator, and a second positive electrode are sequentially stacked from below, and the insulating coating layer may be provided on the second positive electrode.

Also, in the electrode assembly according to the present invention, the second positive electrode may be configured such that a second positive electrode active material, a second positive electrode current collector, and an insulating coating layer are sequentially stacked from below.

Also, in the electrode assembly according to the present invention, the second monocell may have a thickness ranging from 150 to 250 µm.

Also, in the electrode assembly according to the present invention, the insulating coating layer may have a thickness ranging from 10 to 20 µm.

Also, in the electrode assembly according to the present invention, the at least one first monocell may be configured such that a first separator, a first negative electrode, a first separator, and a first positive electrode are sequentially stacked from below, and at least one of the first negative electrode and the second negative electrode configured to store lithium ions may include silicon.

Also, in the electrode assembly according to the present invention, the silicon may be included so as to account for 95 wt% or more based on the negative electrode active material.

Also, in the electrode assembly according to the present invention, the at least one first monocell may have a thickness ranging from 150 to 250 µm.

Also, in the electrode assembly according to the present invention, the at least one first monocell may have a thickness ranging from 150 to 200 µm.

In addition, the present invention provides a battery cell including the electrode assembly.

In addition, an electrode assembly manufacturing method according to the present invention includes a first step of preparing at least one first monocell and a second monocell and a second step of sequentially stacking the at least one first monocell and the second monocell from below, wherein the at least one first monocell is configured such that a first separator, a first negative electrode, a first separator, and a first positive electrode are sequentially stacked from below, the second monocell is configured such that a second separator, a second negative electrode, a second separator, and a second positive electrode are sequentially stacked from below, and the second positive electrode includes a second positive electrode current collector, a second positive electrode active material provided on a lower surface of the second positive electrode current collector, and an insulating coating layer provided on an upper surface of the second positive electrode current collector.

Also, in the electrode assembly manufacturing method according to the present invention, the insulating coating layer may include ceramic.

Also, in the electrode assembly manufacturing method according to the present invention, at least one of the first negative electrode and the second negative electrode may include silicon.

### [Advantageous Effects]

As is apparent from the above description, an insulating coating layer is located at the uppermost end of a second positive electrode constituting a second monocell of an electrode assembly according to the present invention, whereby it is possible to maintain the insulation between the electrode assembly and the battery case without a separate separator configured to cover the entirety of the electrode assembly, which contributes to simplification of the production process and reduction of manufacturing costs.

In addition, when the insulating coating layer located at the uppermost end of the second positive electrode constituting the second monocell of the electrode assembly according to the present invention is made of ceramic, it is possible to minimize the phenomenon of the second positive electrode or the second monocell being bent or drooping, which facilitates transportation or stacking of the second positive electrode or the second monocell.

Furthermore, a silicon-based negative electrode active material is mainly used as a negative electrode active material of the electrode assembly according to the present invention, and therefore it is possible to increase the storage amount of lithium ions, which improves energy density.

### [Description of Drawings]

FIG. 1 is a sectional view of a conventional electrode stack.
FIG. 2 is an exploded sectional view of an electrode assembly according to a preferred embodiment of the present invention.
FIG. 3 is an enlarged sectional view of a first monocell according to a preferred embodiment of the present invention.
FIG. 4 is an enlarged sectional view of a second monocell according to a preferred embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, an electrode assembly including a positive electrode having an insulating coating layer according to the present invention and a method of manufacturing the same will be described with reference to the accompanying drawings.

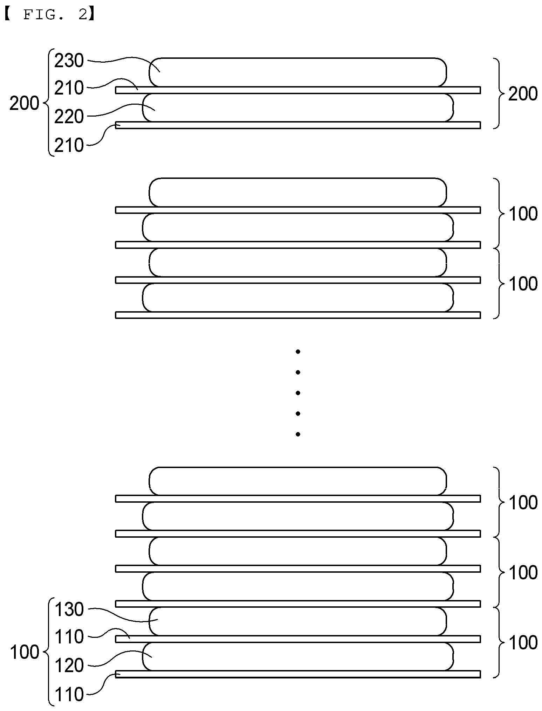

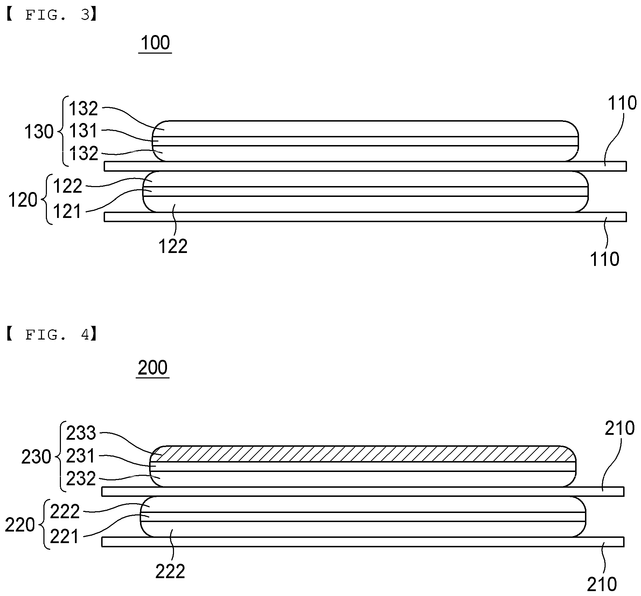

FIG. 2 is an exploded sectional view of an electrode assembly according to a preferred embodiment of the present invention, FIG. 3 is an enlarged sectional view of a first monocell according to a preferred embodiment of the present invention, and FIG. 4 is an enlarged sectional view of a second monocell according to a preferred embodiment of the present invention.

Referring to FIGs. 2 to 4, the electrode assembly according to the present invention includes at least one first monocell 100 and one second monocell 200, wherein the first monocell 100 is located below and the second monocell 200 is disposed at the uppermost end.

First, the first monocell 100 is substantially identical in configuration to a commonly known monocell including two separators, one negative electrode, and one positive electrode. That is, a first separator 110, a first negative electrode 120, a first separator 110, and a first positive electrode 130 are stacked in that order from below.

The first separators 110 are located on a lower surface of the first negative electrode 120 and between an upper surface of the first negative electrode 120 and a lower surface of the first positive electrode 130, respectively, to prevent short circuit between the first negative electrode 120 and the first positive electrode 130 and to allow only migration of lithium ions.

The first separator 110 is preferably made of any one selected from among polyethylene, polypropylene, a polyethylene/polypropylene bilayer, a polyethylene/polypropylene/polyethylene triple layer, a polyethylene/polyethylene/polypropylene triple layer, and organic fiber filter paper. However, the present invention is not limited thereto.

The first negative electrode 120 includes a first negative electrode current collector 121 and a first negative electrode active material 122 applied to each of a lower surface and an upper surface of the first negative electrode current collector 121.

The first negative electrode current collector 121 is generally manufactured so as to have a thickness ranging from 3 to 500 um. The first negative electrode current collector 121 is not particularly restricted, as long as the first negative electrode current collector exhibits high conductivity while the first negative electrode current collector does not induce any chemical change in a battery to which the first negative electrode current collector is applied. For example, the first negative electrode current collector may be made of copper, stainless steel, aluminum, nickel, titanium, or sintered carbon. Alternatively, the first negative electrode current collector may be made of copper or stainless steel, the surface of which is treated with carbon, nickel, titanium, or silver, or an aluminum-cadmium alloy.

In addition, the first negative electrode current collector may have a micro-scale uneven pattern formed on the surface thereof so as to increase binding force of the negative electrode active material. The first negative electrode current collector may be configured in any of various forms, such as a film, a sheet, a foil, a net, a porous body, a foam body, and a non-woven fabric body.

The first negative electrode active material 122 configured to store lithium ions may include a silicon-based negative electrode active material and/or lithium metal, including graphite, or most of the negative electrode active material may be constituted by silicon. For example, silicon is preferably included so as to account for 95 wt% or more, and more preferably 99 wt%, based on the negative electrode active material.

The silicon-based negative electrode active material may be at least one of Si, SiO, SiO₂, and a nano-silicon composite, the nano-silicon composite may be any one of silicon alloys, and the metal element included in the silicon alloys may be at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, and Po.

Of course, the first negative electrode active material 122 may be applied to the first negative electrode current collector 121 in the state in which a conductive agent and a binder are further mixed with the first negative electrode active material.

The conductive agent is a component configured to further improve conductivity of the negative electrode active material, and carbon black, such as acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used in a certain proportion.

The binder is a component assisting in binding between the negative electrode active material and the conductive agent and in binding with the current collector, and may include at least one selected from the group consisting of styrene butadiene rubber (SBR), acrylonitrile butadiene rubber, acrylic rubber, butyl rubber, fluoro rubber, polyvinyl alcohol, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacrylamide (PAM).

When the silicon-based negative electrode active material is used to store lithium ions, as described above, it is possible to store more lithium ions per unit area than a conventionally used graphite-based negative electrode active material, thereby improving energy density, which may contribute to reducing the overall volume of the electrode assembly.

The first positive electrode 130 includes a first positive electrode current collector 131 and a first positive electrode active material 132 applied to each of a lower surface and an upper surface of the first positive electrode current collector 131.

The first positive electrode current collector 131 may generally have a thickness ranging from 3 to 500 um. The first positive electrode current collector is not particularly restricted as long as the first positive electrode current collector exhibits high conductivity while the first positive electrode current collector does not induce any chemical change in a battery. For example, the first positive electrode current collector may be made of stainless steel, aluminum, nickel, titanium, or sintered carbon. Alternatively, the first positive electrode current collector may be made of aluminum or stainless steel, the surface of which is treated with carbon, nickel, titanium, or silver. In addition, the first positive electrode current collector may have a micro-scale uneven pattern formed on the surface thereof so as to increase adhesive force of the positive electrode active material, or the first positive electrode current collector may be configured in any of various forms, such as a film, a sheet, a foil, a net, a porous body, a foam body, and a non-woven fabric body.

A layered compound, such as lithium cobalt oxide (LiCoO₂) or lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; an Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; Fe₂(MoO₄)₃; or LiNiₓMn₂₋ₓO₄ (0.01 ::;; x≤ 0.6) may be used as the first positive electrode active material 132.

Meanwhile, the first positive electrode active material 132 may be mixed with a conductive agent and a binder, and a filler may be further added as needed.

The conductive agent is generally added so that the conductive agent accounts for 1 to 50 weight% based on the total weight of the mixture including the first positive electrode active material 132. The conductive agent is not particularly restricted as long as the conductive agent exhibits high conductivity without inducing any chemical change in a battery to which the conductive agent is applied. For example, graphite, such as natural graphite or artificial graphite; carbon black, such as carbon black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder is a component assisting in binding between the first positive electrode active material 132 and the conductive agent and in binding with the current collector, and is generally added in an amount of 1 to 50 weight% based on the total weight of the mixture including the first positive electrode active material 132. As examples of the binder, there may be used polyvinylidene fluoride, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylene-propylene-diene terpolymer (EPDM), sulfonated EPDM, styrene butadiene rubber, fluoro rubber, and various copolymers.

The thickness of the first monocell 100 including the aforementioned configurations may be 400 um or less, preferably 150 to 250 um, more preferably 150 to 200 µm.

The second monocell 200 is similar in structure to the first monocell 100, and is configured such that a second separator 210, a second negative electrode 220, a second separator 210, and a second positive electrode 230 are stacked in that order from below.

Here, the second separator 210 may be identical to the first separator 110 of the first monocell 100, and the second negative electrode 220 may have the same configuration as the first negative electrode 120 described above, and therefore duplicate descriptions thereof will be omitted.

The second positive electrode 230 includes a second positive electrode current collector 231, a second positive electrode active material 232 applied to a lower surface of the second positive electrode current collector 231, and an insulating coating layer 233 located on an upper surface of the second positive electrode current collector 231.

The second positive electrode current collector 231 and the second positive electrode active material 232 have the same configuration as the first positive electrode current collector 131 and the first positive electrode active material 132, respectively.

The insulating coating layer 233, which is located on the upper surface of the second positive electrode current collector 231, i.e., the uppermost end of the electrode assembly, may be made of an insulating material.

The material of the insulating coating layer 233 is preferably at least one selected from among polyethylene terephthalate (PET), polypropylene (PP), and ceramic, and polypropylene (PP) or ceramic is more preferably used.

In particular, it is most preferable for the insulating coating layer 233 to be made of ceramic. The reason for this is that the mechanical strength of the second positive electrode 230 is improved due to formation of a ceramic coating layer, and furthermore the second positive electrode may be maintained in a somewhat stiff state, which facilitates transportation or stacking of the second positive electrode 230.

Here, the thickness of the insulating coating layer 233 is preferably 10 to 20 µm.

When the surface of the electrode assembly that is exposed to the outside while being located at the uppermost end of the electrode assembly is formed as the insulating coating layer 233, as described above, the insulation between the electrode assembly and the battery case may be maintained without a separate separator configured to cover the entirety of the electrode assembly.

Furthermore, a half-cell including a separator, a negative electrode, and a separator is located at the uppermost end of the conventional electrode assembly, whereas, in the present invention, the second positive electrode, which has the second positive electrode active material applied to the lower surface of the second positive electrode current collector and the insulating coating layer provided on the upper surface of the second positive electrode current collector, is further provided on the upper surface of the separator. Consequently, the thickness of the half-cell is increased compared to the conventional half-cell, whereby it is possible to achieve stabilization of processes, such as transferring or stacking, of the half-cell.

Meanwhile, the thickness of the second monocell 200 including the aforementioned configurations may be 400 um or less, preferably 150 to 250 um, more preferably 150 um to less than 200 µm.

An electrode assembly manufacturing method according to the present invention having the aforementioned configuration includes a first step of preparing at least one first monocell 100 and one second monocell 200 and a second step of sequentially stacking the at least one first monocell 100 and the second monocell 200 from below.

As described above, the first monocell 100 has a structure in which a first separator 110, a first negative electrode 120, a first separator 110, and a first positive electrode 130 are stacked in that order from below, and the second monocell 200 has a structure in which a second separator 210, a second negative electrode 220, a second separator 210, and a second positive electrode 230 are stacked in that order from below.

The detailed configurations of the first separator 110, the first negative electrode 120, the first separator 110, and the first positive electrode 130 constituting the first monocell 100, and the second separator 210, the second negative electrode 220, the second separator 210, and the second positive electrode 230 constituting the second monocell 200 are as described above, and therefore duplicate descriptions thereof will be omitted.

The present invention provides a pouch-shaped secondary battery having the electrode assembly received therein and a battery module or a battery pack including the secondary battery.

Those skilled in the art to which the present invention pertains will appreciate that various applications and modifications are possible within the category of the present invention based on the above description.

### (Description of Reference Numerals)

100: First monocell
110: First separator
120: First negative electrode
121: First negative electrode current collector 122: First negative electrode active material
130: First positive electrode
131: First positive electrode current collector 132: First positive electrode active material
200: Second monocell
210: Second separator
220: Second negative electrode
221: Second negative electrode current collector 222: Second negative electrode active material
230: Second positive electrode
231: Second positive electrode current collector 232: Second positive electrode active material
233: Insulating coating layer

## Claims

1. An electrode assembly comprising:
at least one first monocell; and
a second monocell stacked on an uppermost end of the at least one first monocell,
wherein the second monocell has an insulating coating layer.

2. The electrode assembly according to claim 1, wherein the insulating coating layer comprises any one of polyethylene terephthalate (PET), polypropylene (PP), and ceramic.

3. The electrode assembly according to claim 2, wherein the insulating coating layer comprises ceramic.

4. The electrode assembly according to claim 2, wherein the second monocell is configured such that a second separator, a second negative electrode, a second separator, and a second positive electrode are sequentially stacked from below, and the insulating coating layer is provided on the second positive electrode.

5. The electrode assembly according to claim 4, wherein the second positive electrode is configured such that a second positive electrode active material, a second positive electrode current collector, and an insulating coating layer are sequentially stacked from below.

6. The electrode assembly according to claim 3, wherein the second monocell has a thickness ranging from 150 to 250 µm.

7. The electrode assembly according to claim 6, wherein the insulating coating layer has a thickness ranging from 10 to 20 µm.

8. The electrode assembly according to claim 4, wherein the at least one first monocell is configured such that a first separator, a first negative electrode, a first separator, and a first positive electrode are sequentially stacked from below, and at least one of the first negative electrode and the second negative electrode configured to store lithium ions comprises silicon.

9. The electrode assembly according to claim 8, wherein the silicon is included so as to account for 95 wt% or more based on the negative electrode active material.

10. The electrode assembly according to claim 8, wherein the at least one first monocell has a thickness ranging from 150 to 250 µm.

11. The electrode assembly according to claim 10, wherein the at least one first monocell has a thickness ranging from 150 to 200 µm.

12. A battery cell comprising the electrode assembly according to any one of claims 1 to 11.

13. An electrode assembly manufacturing method comprising:
a first step of preparing at least one first monocell and a second monocell; and
a second step of sequentially stacking the at least one first monocell and the second monocell from below, wherein
the at least one first monocell is configured such that a first separator, a first negative electrode, a first separator, and a first positive electrode are sequentially stacked from below,
the second monocell is configured such that a second separator, a second negative electrode, a second separator, and a second positive electrode are sequentially stacked from below, and
the second positive electrode comprises a second positive electrode current collector, a second positive electrode active material provided on a lower surface of the second positive electrode current collector, and an insulating coating layer provided on an upper surface of the second positive electrode current collector.

14. The electrode assembly manufacturing method according to claim 13, wherein the insulating coating layer comprises ceramic.

15. The electrode assembly manufacturing method according to claim 14, wherein at least one of the first negative electrode and the second negative electrode comprises silicon.
